(19) 

Europäisches
Patentamt

European
Patent Office

Office européen
des brevets

(11) **EP 3 770 000 A1**

(12) **EUROPÄISCHE PATENTANMELDUNG**

(43) Veröffentlichungstag:
 **27.01.2021 Patentblatt 2021/04**

(21) Anmeldenummer: **20185258.9**

(22) Anmeldetag: **10.07.2020**

(51) Int Cl.:
 **B60L 3/12** (2006.01)  **B60L 5/38** (2006.01)
 **B60L 5/39** (2006.01)  **B60L 5/40** (2006.01)
 **B60L 5/42** (2006.01)  **B60L 9/00** (2019.01)

(84) Benannte Vertragsstaaten:
 **AL AT BE BG CH CY CZ DE DK EE ES FI FR GB
 GR HR HU IE IS IT LI LT LU LV MC MK MT NL NO
 PL PT RO RS SE SI SK SM TR**
 Benannte Erstreckungsstaaten:
 **BA ME**
 Benannte Validierungsstaaten:
 **KH MA MD TN**

(30) Priorität: **26.07.2019 DE 102019211168**

(71) Anmelder: **Siemens Mobility GmbH
 81739 München (DE)**

(72) Erfinder: **Förster, Till
 90763 Fürth (DE)**

(54) **FAHRZEUG UND VERFAHREN ZUM BETREIBEN EINES FAHRZEUGS**

(57) Die Erfindung bezieht sich auf ein Fahrzeug (10) mit zumindest einem Stromabnehmer (20) zum Anschluss an eine streckenseitige elektrische Energieversorgung und mindestens einem eine Primärseite (41) aufweisenden Transformator (40), dessen Primärseite (41) mit dem Stromabnehmer (20) über einen Schalter (50) in Verbindung steht.

Erfindungsgemäß ist vorgesehen, dass eine Stillstandsstromüberwachungseinrichtung (100) vorhanden ist, die den Schalter (50) öffnet und den Transformator (40) von dem Stromabnehmer (20) trennt, wenn bei Fahrzeugstillstand der Strom (It1) durch die Primärseite (41) des Transformators (40) einen vorgegebenen oder von der Stillstandsstromüberwachungseinrichtung (100) ermittelten Maximalwert (MW, MW1) überschreitet.

FIG 4

**Beschreibung**

Die Erfindung bezieht sich auf Fahrzeuge mit zumindest einem Stromabnehmer zum Anschluss an eine streckenseitige elektrische Energieversorgung und mindestens einem eine Primärseite aufweisenden Transformator, dessen Primärseite mit dem Stromabnehmer über einen Schalter in Verbindung steht. Derartige Fahrzeuge sind in Form von Schienenfahrzeugen im Bereich der Eisenbahntechnik bekannt.

Die Erfindung beschäftigt sich mit dem Problem, dass im Falle eines Fahrzeugstillstands der Strom durch den Stromabnehmer eine vorgegebene Maximalstromschwelle nicht überschreiten darf, um eine punktuelle Überlastung eines quasi punktförmig am Stromabnehmer anliegenden, streckenseitigen Fahrdrahts und ein thermisch bedingtes Reißen des Fahrdrahts zu vermeiden.

Diese Aufgabe wird erfindungsgemäß durch ein Fahrzeug mit den Merkmalen gemäß Patentanspruch 1 gelöst. Vorteilhafte Ausgestaltungen des erfindungsgemäßen Fahrzeugs sind in Unteransprüchen angegeben.

Danach ist erfindungsgemäß vorgesehen, dass eine Stillstandsstromüberwachungseinrichtung vorhanden ist, die den Schalter öffnet und den Transformator von dem Stromabnehmer trennt, wenn bei Fahrzeugstillstand der Strom durch die Primärseite des Transformators einen vorgegebenen oder von der Stillstandsstromüberwachungseinrichtung ermittelten Maximalwert überschreitet.

Ein wesentlicher Vorteil des erfindungsgemäßen Fahrzeugs ist darin zu sehen, dass durch die erfindungsgemäß vorgesehene Stillstandsstromüberwachungseinrichtung in einfacher Weise vermieden werden kann, dass durch die Primärseite eines an den Stromabnehmer angeschlossenen Transformators bei Fahrzeugstillstand ein übermäßig großer Strom fließt und ein an dem Stromabnehmer anliegender Stromleiter (wie beispielsweise ein Fahrdraht) thermisch beschädigt wird.

Bei einer vorteilhaften Ausführungsvariante ist vorgesehen, dass das Fahrzeug in einem sich durch die Primärseite des Transformators erstreckenden Primärstrompfad einen ersten und einen zweiten Stromsensor umfasst, wobei einer der zwei Stromsensoren - in Stromflussrichtung vom Stromabnehmer in Richtung Transformator gesehen - vor dem Transformator und der andere hinter dem Transformator angeordnet ist, die Stillstandsstromüberwachungseinrichtung eine erste Teileinrichtung aufweist, die den Strom durch den ersten Stromsensor überwacht und einen Ausschaltbefehl für den Schalter erzeugt, wenn der Strom durch den ersten Stromsensor den Maximalwert erreicht oder überschreitet, und die Stillstandsstromüberwachungseinrichtung eine zweite Teileinrichtung aufweist, die den Strom durch den zweiten Stromsensor überwacht und einen Ausschaltbefehl für den Schalter erzeugt, wenn der Strommesswert des zweiten Stromsensors oder ein mit diesem gebildeter Hilfswert eine vorgegebene Hilfsbedingung erfüllt.

Mit Blick auf eine minimale Anzahl an Komponenten und niedrige Herstellungskosten wird es als vorteilhaft angesehen, wenn der erste und zweite Stromsensor Bestandteile einer Transformatordifferentialschutzeinrichtung sind, die ein einen Fehler des Transformators anzeigendes Transformatorfehlersignal erzeugt, wenn die vom ersten und zweiten Stromsensor gemessenen Ströme über ein vorgegebenes Maß hinaus voneinander abweichen. Die Stromsensoren der Transformatordifferentialschutzeinrichtung werden bei dieser letztgenannten Ausführungsform in vorteilhafter Weise doppelt genutzt, nämlich sowohl für den Transformatordifferentialschutz als auch für die Stillstandsstromüberwachung.

Mit Blick auf die Überwachung der korrekten Funktionsweise der Stillstandsstromüberwachungseinrichtung wird es als vorteilhaft angesehen, wenn diese eine Alarmeinrichtung aufweist, die ein einen Fehler der Stillstandsstromüberwachungseinrichtung anzeigendes Fehlersignal erzeugt, wenn die vom ersten und zweiten Stromsensor gemessenen Ströme über ein vorgegebenes Maß hinaus voneinander abweichen.

Mit Blick auf eine minimale Anzahl an Komponenten und niedrige Herstellungskosten wird es als vorteilhaft angesehen, wenn die Alarmeinrichtung in der Transformatordifferentialschutzeinrichtung integriert ist oder durch die Transformatordifferentialschutzeinrichtung selbst gebildet ist und das Transformatorfehlersignal in unverarbeiteter oder verarbeiteter Form als Fehlersignal der Stillstandsstromüberwachungseinrichtung angesehen und beispielsweise weitergeleitet wird, insbesondere an eine zentrale Fahrzeugsteuereinrichtung des Fahrzeugs.

Die erste oder zweite Teileinrichtung wird vorzugsweise durch ein Teilmodul, insbesondere ein Softwaremodul, der Transformatordifferentialschutzeinrichtung gebildet ist und die jeweils andere Teileinrichtung wird vorzugsweise durch ein Teilmodul, insbesondere ein Softwaremodul, einer zentralen Fahrzeugsteuereinrichtung gebildet.

Eine Antriebssteuereinrichtung des Fahrzeugs empfängt vorzugsweise die Strommesswerte des zweiten Stromsensors und leitet diese zu der zentralen Fahrzeugsteuereinrichtung, vorzugsweise über eine Fahrzeugdatenleitung oder einen Fahrzeugdatenbus, weiter. Alternativ oder zusätzlich kann die Antriebssteuereinrichtung als zweite Teileinrichtung arbeiten und die Strommesswerte des zweiten Stromsensors überwachen und den Ausschaltbefehl für den Schalter erzeugen, wenn der Strommesswert des zweiten Stromsensors oder ein mit diesem gebildeter Hilfswert eine vorgegebene Hilfsbedingung erfüllt.

Dem Fahrzeug ist vorzugsweise ein Stromabnehmermaximalstromwert zugeordnet, der den maximalen Strom durch den Stromabnehmer angibt.

Sind zu dem Transformator ein oder mehr weitere Transformatoren oder ein oder mehr andere Lasten unter Bildung einer Parallelschaltung parallel geschaltet, so wird vorzugsweise in jedem Zweig der Parallelschaltung der Strom unter Bildung von zweigbezogenen Strommesswerten gemessen; die zweite Teileinrichtung summiert vorzugsweise die zweigbezogenen Strommesswerte unter Bildung des Hilfswertes und sieht die vorgegebene Hilfsbedingung als erfüllt an und erzeugt den Ausschaltbefehl für den Schalter, wenn der Hilfswert den Stromabnehmermaximalstromwert erreicht oder überschreitet.

Auch ist es vorteilhaft, wenn bei der letztgenannten Variante mit parallel geschalteten elektrischen Lasten eine Maximalwertbestimmungseinrichtung der Stillstandsstromüberwachungseinrichtung den oben genannten Maximalwert in Abhängigkeit von dem Stromabnehmermaximalstromwert und der Anzahl der Zweige gemäß einer vorgegebenen Verteilfunktion, insbesondere durch Division des Stromabnehmermaximalstromwerts durch die Anzahl der parallelen Zweige der Parallelschaltung, ermittelt.

Fließt alternativ der gesamte durch den Stromabnehmer fließende Strom auch durch den Transformator, so bildet vorzugsweise der Stromabnehmermaximalstromwert selbst den Maximalwert. Die zweite Teileinrichtung sieht die vorgegebene Hilfsbedingung vorzugsweise als erfüllt an und erzeugt den Ausschaltbefehl für den Schalter, wenn der Strommesswert des zweiten Stromsensors den Maximalwert erreicht oder überschreitet.

Bei dem Fahrzeug handelt es sich vorzugsweise um ein Schienenfahrzeug oder ein mittels einer Oberleitung gespeistes Elektrofahrzeug, insbesondere einen Bus des öffentlichen Nahverkehrs.

Die Erfindung bezieht sich darüber hinaus auf ein Verfahren zum Betreiben eines Fahrzeugs, das zumindest einen Stromabnehmer zum Anschluss an eine streckenseitige elektrische Energieversorgung und mindestens einen eine Primärseite aufweisenden Transformator, dessen Primärseite mit dem zumindest einen Stromabnehmer über einen Schalter in Verbindung steht, umfasst.

Erfindungsgemäß ist vorgesehen, dass der Schalter geöffnet und der Transformator von dem Stromabnehmer getrennt wird, wenn bei Fahrzeugstillstand der Strom durch die Primärseite des Transformators einen vorgegebenen oder ermittelten Maximalwert überschreitet.

Bezüglich der Vorteile des erfindungsgemäßen Verfahrens sowie bezüglich vorteilhafter Ausgestaltungen des Verfahrens sei auf die obigen Ausführungen im Zusammenhang mit dem erfindungsgemäßen Fahrzeug und dessen vorteilhafter Ausgestaltungen verwiesen.

Vorteilhaft ist es bei dem letztgenannten Verfahren, wenn das Fahrzeug in einem sich durch die Primärseite des Transformators erstreckenden Primärstrompfad einen ersten und einen zweiten Stromsensor umfasst, wobei einer der zwei Stromsensoren - in Stromflussrichtung vom Stromabnehmer in Richtung Transformator gesehen - vor dem Transformator und der andere hinter dem Transformator angeordnet ist, der Strom durch den ersten Stromsensor überwacht und ein Ausschaltbefehl für den Schalter erzeugt wird, wenn der Strom durch den ersten Stromsensor den Maximalwert erreicht oder überschreitet, und der Strom durch den zweiten Stromsensor überwacht wird und ein Ausschaltbefehl für den Schalter erzeugt wird, wenn der Strommesswert des zweiten Stromsensors oder ein mit diesem gebildeter Hilfswert eine vorgegebene Hilfsbedingung erfüllt.

Alternativ oder zusätzlich kann in vorteilhafter Weise vorgesehen sein, dass der erste und zweite Stromsensor Bestandteile einer Transformatordifferentialschutzeinrichtung sind und ein einen Transformatorfehler anzeigendes Transformatorfehlersignal erzeugt wird, wenn die vom ersten und zweiten Stromsensor gemessenen Ströme über ein vorgegebenes Maß hinaus voneinander abweichen, und bei Vorliegen des Transformatorfehlersignals auf einen Fehler der Stillstandsstromüberwachung geschlossen wird.

Alternativ oder zusätzlich kann in vorteilhafter Weise vorgesehen sein, dass der Strom durch den ersten Stromsensor von der Transformatordifferentialschutzeinrichtung überwacht wird und diese den Ausschaltbefehl für den Schalter erzeugt, wenn der Strom durch den ersten Stromsensor den Maximalwert erreicht oder überschreitet, und der Strom durch den zweiten Stromsensor von der zentralen Fahrzeugsteuereinrichtung überwacht wird und diese den Ausschaltbefehl für den Schalter erzeugt, wenn der Strommesswert des zweiten Stromsensors oder ein mit diesem gebildeter Hilfswert eine vorgegebene Hilfsbedingung erfüllt.

Alternativ oder zusätzlich kann in vorteilhafter Weise vorgesehen sein, dass eine Antriebssteuereinrichtung des Fahrzeugs die Strommesswerte des zweiten Stromsensors empfängt und diese zu der zentralen Fahrzeugsteuereinrichtung, vorzugsweise über eine Fahrzeugdatenleitung oder einen Fahrzeugdatenbus, weiterleitet. Alternativ oder zusätzlich kann die Antriebssteuereinrichtung die empfangenen Strommesswerte des zweiten Stromsensors überwachen und den Ausschaltbefehl für den Schalter erzeugen, wenn der Strommesswert des zweiten Stromsensors oder ein mit diesem gebildeter Hilfswert eine vorgegebene Hilfsbedingung erfüllt.

Die Erfindung wird nachfolgend anhand von Ausführungsbeispielen näher erläutert; dabei zeigen beispielhaft

Figur 1    ein Ausführungsbeispiel für ein erfindungsgemäßes Fahrzeug, das mit einer Stillstandsstromüberwachungseinrichtung ausgestattet ist,

Figur 2    ein Ausführungsbeispiel für ein erfindungsgemäßes Fahrzeug mit einer Stillstandsstromüberwachungseinrichtung, bei der Messwerte eines Stromsensors über eine Antriebssteuereinrichtung zu einer Teileinrichtung der Stillstandsstromüberwachungseinrichtung übermittelt werden,

Figur 3    ein Ausführungsbeispiel für ein erfindungsgemäßes Fahrzeug, bei dem an einen Stromabnehmer zwei oder mehr Transformatoren angeschlossen sind und eine Stillstandsstromüberwachungseinrichtung den Strom durch den Stromabnehmer überwacht,

Figur 4    ein Ausführungsbeispiel für ein erfindungsgemäßes Fahrzeug, bei dem an einem Stromabnehmer zwei oder mehr Transformatoren angeschlossen sind und eine Stillstandsstromüberwachungseinrichtung den Strom durch den Stromabnehmer überwacht, wobei Messwerte von Stromsensoren über Antriebssteuereinrichtungen zu einer Teileinrichtung der Stillstandsstromüberwachungseinrichtung übermittelt werden,

Figur 5    ein Ausführungsbeispiel für eine Transformatordifferentialschutzeinrichtung, die bei den Fahrzeugen gemäß den Figuren 1 bis 4 eingesetzt werden kann, und

Figur 6    ein Ausführungsbeispiel für eine Fahrzeugsteuereinrichtung, die bei den Fahrzeugen gemäß den Figuren 1 bis 4 eingesetzt werden kann.

In den Figuren werden der Übersicht halber für identische oder vergleichbare Komponenten stets dieselben Bezugzeichen verwendet.

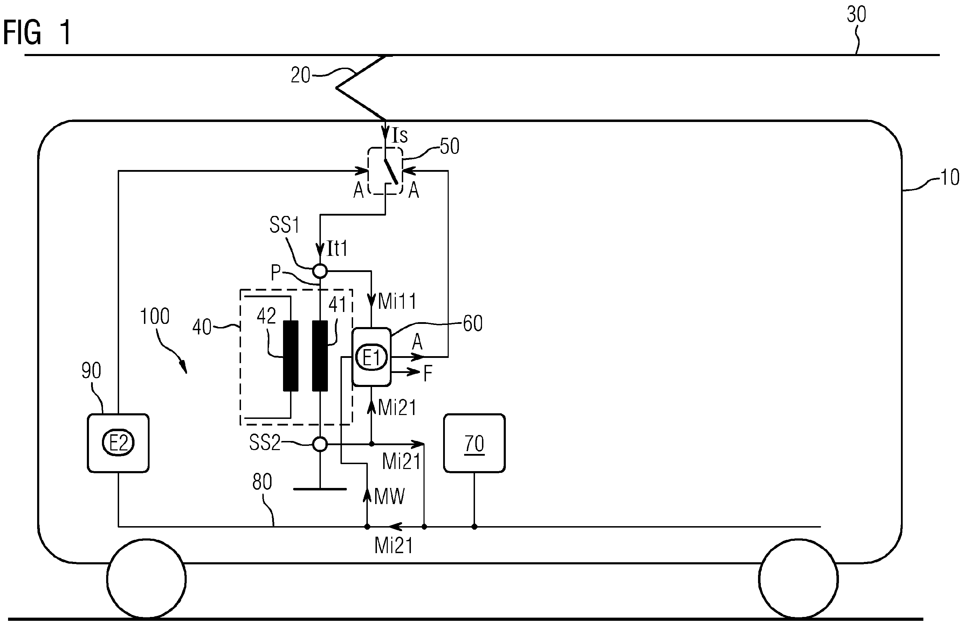

Die Figur 1 zeigt ein Fahrzeug 10, das über einen Stromabnehmer 20 mit einem Fahrdraht 30 einer streckenseitigen elektrischen Energieversorgung in Verbindung steht. Ein Transformator 40 ist über einen Schalter 50 an den Stromabnehmer 20 angeschlossen und steht somit mit dem Fahrdraht 30 in Verbindung.

Der Transformator 40 weist eine Primärseite 41 und zumindest eine Sekundärseite 42 auf. Der sich durch die Primärseite 41 des Transformators 40 erstreckende Primärstrompfad ist in der Figur 1 mit dem Bezugzeichen P gekennzeichnet.

Bei dem Ausführungsbeispiel gemäß Figur 1 ist lediglich ein einziger Transformator 40 bzw. ein einziger Verbraucher über den Schalter 50 an den Stromabnehmer 20 angeschlossen, sodass der durch den Stromabnehmer 20 fließende Strom Is auch durch den Primärstrompfad P des Transformators 40 fließen muss. Der Strom durch den Primärstrompfad P ist in der Figur 1 mit dem Bezugzeichen It1 gekennzeichnet. Es gilt also:

$$Is = It1$$

Dem Transformator 40 ist eine Transformatordifferentialschutzeinrichtung 60 zugeordnet, die über einen ersten Stromsensor SS1 und einen zweiten Stromsensor SS2 an den Primärstrompfad P des Transformators 40 angeschlossen ist. Der erste Stromsensor SS1 befindet sich im Primärstrompfad P vom Schalter 50 aus gesehen vor dem Transformator 40 und der zweite Stromsensor SS2 vom Schalter 50 aus gesehen hinter dem Transformator 40.

Mit der Sekundärseite 42 steht über aus Gründen der Übersicht nicht weiter dargestellte Verbindungsleitungen eine Antriebsteuereinrichtung 70 in Verbindung, die zur Ansteuerung eines in der Figur 1 ebenfalls aus Gründen der Übersicht nicht dargestellten Antriebs des Fahrzeugs 10 dient.

Die Antriebsteuereinrichtung 70 ist über eine Datenverbindung 80 mit einer zentralen Fahrzeugsteuereinrichtung 90 verbunden, die die Fahrzeugsteuerung, insbesondere auch die Ansteuerung der Antriebsteuereinrichtung 70, übernimmt bzw. gewährleistet. Bei der Datenverbindung 80 kann es sich um eine beliebige Verbindung handeln, sei es eine optische Leitung, eine elektrische Leitung oder eine Funkverbindung. Vorzugsweise wird die Datenverbindung 80 durch einen leitungsbasierten Datenbus des Fahrzeugs 10 gebildet.

Das Fahrzeug 10 gemäß Figur 1 wird vorzugsweise wie folgt betrieben:
Ist der Schalter 50 geschlossen, so kann der Strom Is durch den Stromabnehmer 20 und durch die Primärseite 41 des Transformators 40 fließen. Die Transformatordifferentialschutzeinrichtung 60 überwacht die korrekte Funktionsweise des Transformators 40 und misst zu diesem Zweck mittels des ersten Stromsensors SS1 einen Strommesswert Mi11, der den durch den ersten Stromsensor SS1 fließenden Strom angibt.

Mit dem zweiten Stromsensor SS2 misst die Transformatordifferentialschutzeinrichtung 60 ebenfalls den Strom It1 im Primärstrompfad P und erzeugt einen Strommesswert Mi21.

Im fehlerfreien Fall wird der gesamte über den ersten Stromsensor SS1 fließende Strom im Primärstrompfad P auch durch den zweiten Stromsensor SS2 fließen, sodass die beiden Strommesswerte Mi11 und Mi21 gleichgroß sein werden. In diesem Fall erkennt die Transformatordifferentialschutzeinrichtung 60, dass der Transformator 40 korrekt arbeitet.

Unterscheiden sich die Strommesswerte Mi11 und Mi21 über ein vorgegebenes Maß hinaus voneinander, beispielsweise weil im Primärstrompfad P ein Erdschluss aufgetreten ist, so erzeugt die Transformatordifferentialschutzeinrichtung 60 ausgangsseitig ein Transformatorfehlersignal F, das auf einen Fehler des Transformators 40 hinweist. Gleichzeitig wird der Schalter 50 vorzugsweise durch einen Ausschaltbefehl A geöffnet.

Das Fahrzeug 10 weist darüber hinaus eine Stillstandsstromüberwachungseinrichtung 100 auf, die eine erste Teileinrichtung E1 und eine zweite Teileinrichtung E2 umfasst. Die erste Teileinrichtung E1 wird bei dem Ausführungsbeispiel gemäß Figur 1 durch ein Teilmodul, vorzugsweise ein Softwaremodul, der Transformatordifferentialschutzeinrichtung 60 gebildet. Die zweite Teileinrichtung E2 wird bei dem Ausführungsbeispiel gemäß Figur 1 durch ein Teilmodul, vorzugsweise ein Softwaremodul, der Fahrzeugsteuereinrichtung 90 gebildet.

Die Stillstandsstromüberwachungseinrichtung 100 dient dazu, sicherzustellen, dass bei einem Fahrzeugstillstand des Fahrzeugs 10 der durch den Stromabnehmer 20 fließende Strom Is einen vorgegebenen Stromabnehmermaximalstromwert Ismax nicht überschreitet. Zu diesem Zweck überwacht die Stillstandsstromüberwachungseinrichtung 100 die Fahrbewegung bzw. die Geschwindigkeit des Fahrzeugs 10 und prüft im Falle eines Fahrzeugstillstands, ob der Strom Is durch den Stromabnehmer 20 dem Stromabnehmermaximalstromwert Ismax überschreitet oder nicht. Wird der Stromabnehmermaximalstromwert Ismax überschritten, so wird der Schalter 50 durch einen Ausschaltbefehl A geöffnet, sodass der Strom Is durch den Stromabnehmer 20 abgeschaltet wird.

Zu diesem Zweck wird die erste Teileinrichtung E1 der Stillstandsstromüberwachungseinrichtung 100 den Strommesswert Mi11 des ersten Stromsensors SS1 der Transformatordifferentialschutzeinrichtung 60 überwachen und diesen mit einem vorgegebenen Maximalwert MW vergleichen. Der Maximalwert MW ist vorzugsweise abhängig davon, ob das Fahrzeug steht oder nicht, und wird der ersten Teileinrichtung E1 beispielsweise über die Datenverbindung 80 von einer Maximalwertbestimmungseinrichtung übermittelt, die vorzugsweise in der zweiten Einrichtung E2 und/oder der Fahrzeugsteuereinrichtung 90 integriert ist.

Da bei dem Ausführungsbeispiel gemäß Figur 1 lediglich eine einzige Last in Form des Transformators 40 an den Stromabnehmer 20 angeschlossen ist und demgemäß der Strom Is durch den Stromabnehmer 20 dem Strom It1 durch den Transformator 40 entspricht, wird der Maximalwert MW bei Fahrzeugstillstand dem Stromabnehmermaximalstromwert Ismax entsprechen. Demgemäß wird die erste Teileinrichtung E1 den Ausschaltbefehl A erzeugen, wenn gilt:

$$MW > Ismax$$

Fährt das Fahrzeug, kann der Maximalwert MW größer sein und einen anderen Wert aufweisen, den die Maximalwertbestimmungseinrichtung für die jeweilige Situation (Netz, Fahrzeug, Strecke, Fahrzeuggeschwindigkeit) individuell festlegt.

Die zweite Teileinrichtung E2 überwacht den Strommesswert Mi21 des zweiten Stromsensors SS2. Der Strommesswert MI21 wird beispielsweise über die Datenverbindung 80 zur zweiten Teileinrichtung E2 übertragen. Die zweite Teileinrichtung E2 überwacht den Strommesswert Mi21 und erzeugt einen Ausschaltbefehl A für den Schalter 50, wenn der Strommesswert Mi21 des zweiten Stromsensors SS2 oder ein mit diesem gebildeter Hilfswert eine vorgegebene Hilfsbedingung erfüllt.

Da bei dem Ausführungsbeispiel gemäß Figur 1 der gesamte Strom Is, der durch den Stromabnehmer 20 fließt, auch durch den zweiten Stromsensor SS2 fließen muss, wird die zweite Teileinrichtung E2 den Ausschaltbefehl A erzeugen, wenn der Strommesswert Mi21 bei Fahrzeugstillstand den Stromabnehmermaximalstromwert Ismax überschreitet; mit anderen Worten wird der Ausschaltbefehl A von der zweiten Teileinrichtung E2 erzeugt, wenn bei Fahrzeugstillstand gilt:

$$Mi21 > Ismax$$

Fährt das Fahrzeug, kann der Strommesswert Mi21 größer sein und einen anderen Wert aufweisen, den die zweite Teileinrichtung E2 für die jeweilige Situation (Netz, Fahrzeug, Strecke, Fahrzeuggeschwindigkeit) beispielsweise individuell festlegen kann.

Zur Überwachung der korrekten Funktionsweise der Stillstandsstromüberwachungseinrichtung 100 weist diese eine Alarmeinrichtung auf, die ein einen Fehler der Stillstandsstromüberwachungseinrichtung 100 anzeigendes Fehlersignal erzeugt, wenn die von den beiden Stromsensoren SS1 und SS2 gemessenen Ströme über ein vorgegebenes Maß hinaus voneinander abweichen.

Die Alarmeinrichtung wird bei dem Ausführungsbeispiel gemäß Figur 1 in vorteilhafter Weise durch die Transformatordifferentialschutzeinrichtung 60 selbst gebildet, da diese bereits aufgrund ihrer Differenzialschutzfunktion einen Vergleich der Strommesswerte Mi11 und Mi21 durchführt. Das Transformatorfehlersignal F, das die Transformatordifferentialschutzeinrichtung 60 zur Überprüfung der korrekten Funktionsweise des Transformators 40 erzeugt, wird in vorteilhafter Weise also gleichzeitig als Fehlersignal für die Stillstandsstromüberwachungseinrichtung 100 gewertet.

Das Transformatorfehlersignal F kann also als Fehlersignal der Alarmeinrichtung der Stillstandsstromüberwachungseinrichtung 100 betrachtet und in unverarbeiteter oder verarbeiteter Form weitergeleitet werden. Das Transformatorfehlersignal F bzw. ein daraus abgeleitetes anderes Fehlersignal wird vorzugsweise über die Datenverbindung 80 zur Fahrzeugsteuereinrichtung 90 weitergeleitet, sodass diese von einer Fehlfunktion der Stillstandsstromüberwachungseinrichtung 100 Kenntnis erlangen kann.

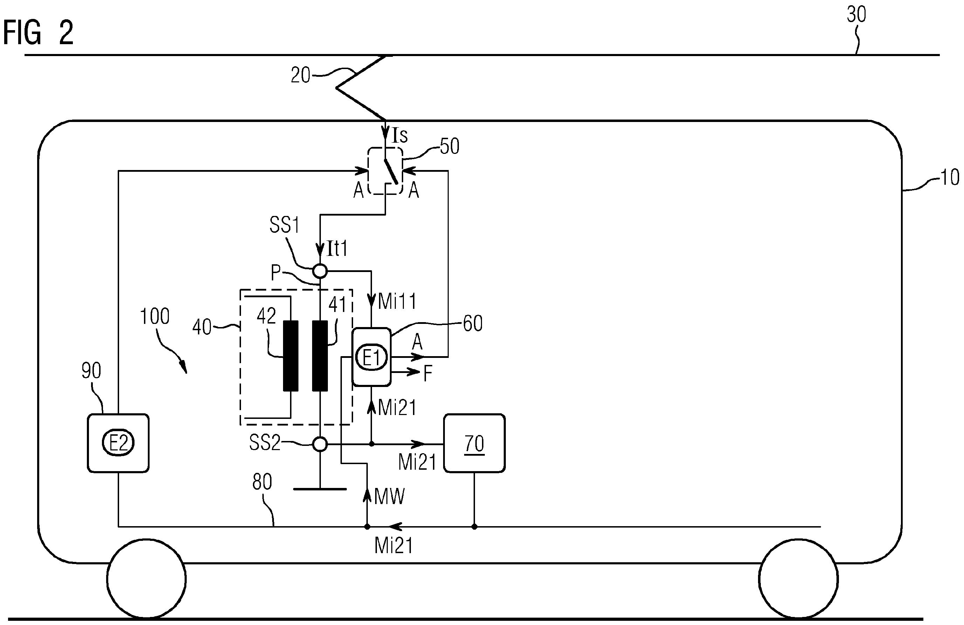

Die Figur 2 zeigt ein weiteres Ausführungsbeispiel für ein Fahrzeug 10, das mit einer Stillstandsstromüberwachungseinrichtung 100 ausgestattet ist. Bei dem Ausführungsbeispiel gemäß Figur 2 werden die Messwerte Mi21 des zweiten Stromsensors SS2 der Transformatordifferentialschutzeinrichtung 60 nicht unmittelbar bzw. direkt über die Datenverbindung 80 zur Fahrzeugsteuereinrichtung 90 und damit zur zweiten Teileinrichtung E2 der Stillstandsstromüberwachungseinrichtung 100 übermittelt, sondern unter Mitwirkung der bzw. über die Antriebsteuereinrichtung 70. Zu diesem Zweck steht die Antriebsteuereinrichtung 70 mit dem zweiten Stromsensor SS2 der Transformatordifferentialschutzeinrichtung 60 in Verbindung und erhält von diesem den Strommesswert Mi21, den die Antriebsteuereinrichtung 70 dann in verarbeiteter oder unverarbeiteter Form über die Datenverbindung 80 zur Fahrzeugsteuereinrichtung 90 und zur zweiten Teileinrichtung E2 überträgt.

Im Übrigen gelten die obigen Ausführungen im Zusammenhang mit der Figur 1 für die Funktionsweise der Stillstandsstromüberwachungseinrichtung 100 und der Transformatordifferentialschutzeinrichtung 60 entsprechend, sodass diesbezüglich auf die obigen Ausführungen verwiesen sei.

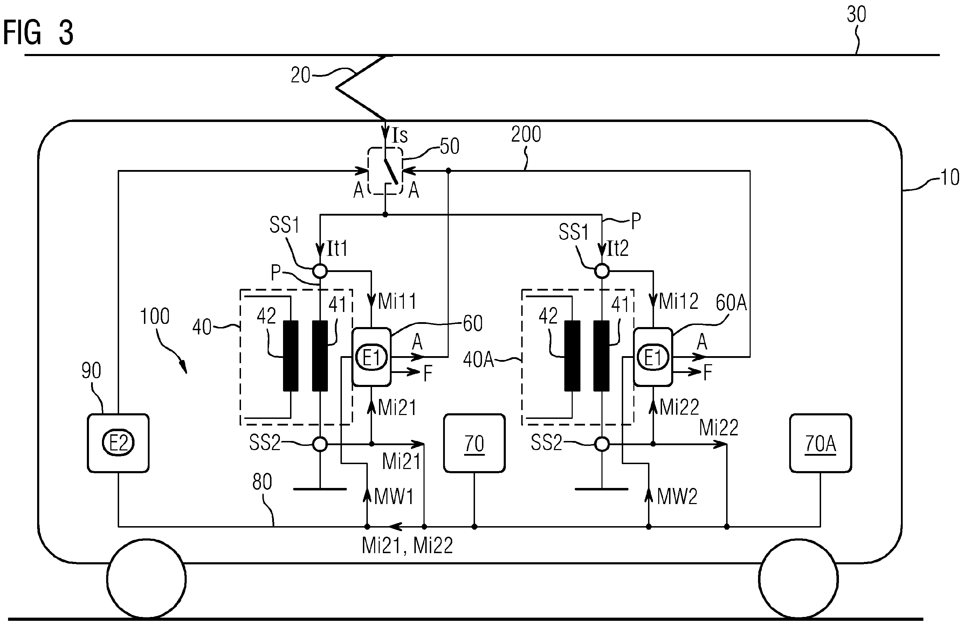

Die Figur 3 zeigt ein Ausführungsbeispiel für ein Fahrzeug 10, bei dem an einen Stromabnehmer 20 nicht nur eine einzige Last in Form eines einzigen Transformators 40, wie bei den Figuren 1 und 2, angeschlossen ist, sondern parallel zu dem Transformator 40 eine weitere Last in Form eines weiteren Transformators 40A. Der weitere Transformator 40A wird von einer weiteren Transformatordifferentialschutzeinrichtung 60A überwacht. An die Sekundärseite 42 des weiteren Transformators 40A ist eine weitere Antriebsteuereinrichtung 70A angeschlossen, die zur Ansteuerung eines aus Gründen der Übersicht nicht weiter dargestellten weiteren Antriebs des Fahrzeugs 10 dient.

Der weitere Transformator 40A, die weitere Transformatordifferentialschutzeinrichtung 60A und die weitere Antriebsteuereinrichtung 70A sind vorzugsweise mit dem Transformator 40, der Transformatordifferentialschutzeinrichtung 60 und der Antriebsteuereinrichtung 70 vergleichbar oder baugleich, sodass die obigen Ausführungen im Zusammenhang mit den Figuren 1 und 2 für das Fahrzeug 10 gemäß Figur 3 entsprechend gelten.

Aufgrund der Parallelschaltung 200 teilt sich der Strom Is durch den Stromabnehmer 20 nun in zwei Zweigströme auf, von denen einer durch den Strom It1 im Primärstrompfad P des Transformators 40 und der andere durch den Strom It2 im Primärstrompfad P des Transformators 40A gebildet wird.

Das Fahrzeug 10 gemäß Figur 3 wird vorzugsweise wie folgt betrieben:
Die beispielsweise in der Fahrzeugsteuereinrichtung 90 und/oder der zweiten Teileinrichtung E2 integrierte Maximalwertbestimmungseinrichtung der Stillstandsstromüberwachungseinrichtung 100 ermittelt zunächst für den Transformator 40 einen Maximalwert MW1, den der Strommesswert Mi11 des ersten Stromsensors SS1 der Transformatordifferentialschutzeinrichtung 60 bei Fahrzeugstillstand nicht überschreiten soll. In entsprechender Weise ermittelt die Maximalwertbestimmungseinrichtung für den Transformator 40A einen Maximalwert MW2, den der Stromwert Mi12 des ersten Stromsensors SS1 der Transformatordifferentialschutzeinrichtung 60A bei Fahrzeugstillstand nicht überschreiten soll. Für die Maximalwerte MW1 und MW2 gilt Folgendes:

$$MW1 + MW2 = Ismax$$

Mit anderen Worten teilt die Maximalwertbestimmungseinrichtung also jedem der beiden Transformatoren 40 und 40A einen Teilstrom zu, den der jeweilige Transformator 40 bzw. 40A bei Fahrzeugstillstand maximal über den Stromabnehmer 20 ziehen darf.

Nachfolgend wird beispielhaft davon ausgegangen, dass die Verteilfunktion, die die Maximalwertbestimmungseinrichtung zur Bestimmung der Maximalwerte MW1 und MW2 heranzieht, durch eine einfache Division des Stromabnehmermaximalstromwerts Ismax durch die Anzahl der parallelen Zweige der Parallelschaltung 200, hier also durch Division mit dem Quotienten 2, durchgeführt wird. Es gilt für den Fahrzeugstillstand also:

$$MW1 = Ismax / 2$$

und

$$MW2 = Ismax / 2$$

Fährt das Fahrzeug 10, können die Strommesswerte Mi11 und Mi12 sowie die Maximalwerte MW1 und MW2 größer sein und höhere Werte aufweisen, die die Maximalwertbestimmungseinrichtung für die jeweilige Situation (Netz, Fahrzeug, Strecke, Fahrzeuggeschwindigkeit) beispielsweise individuell festlegen kann.

Die erste Teileinrichtung E1, die in der Transformatordifferentialschutzeinrichtung 60 integriert ist, vergleicht den Strommesswert Mi11 des ersten Stromsensors SS1 mit dem Maximalwert MW1 und erzeugt einen Ausschaltbefehl A, wenn der Strommesswert Mi11 den Maximalwert MW1 erreicht oder überschreitet.

Die in der Transformatordifferentialschutzeinrichtung 60A integrierte erste Teileinrichtung E1 vergleicht den durch den ersten Stromsensor SS1 fließenden Strom It2 bzw. den entsprechenden Messwert Mi12 mit dem Maximalwert MW2 und erzeugt einen Ausschaltbefehl A, wenn der Strommesswert Mi12 den Maximalwert MW2 erreicht oder überschreitet.

Bei dem Ausführungsbeispiel gemäß Figur 3 weist die Stillstandsstromüberwachungseinrichtung 100 also für jeden der Transformatoren 40 und 40A jeweils eine individuelle erste Teileinrichtung E1 auf, die den Strom durch den jeweiligen ersten Stromsensor SS1 der jeweiligen Antriebsteuereinrichtung 70 bzw. 70A überwacht, wie dies auch im Zusammenhang mit den Figuren 1 und 2 für den Transformator 40 erläutert worden ist.

Die zweite Teileinrichtung E2 erhält von den zweiten Stromsensoren SS2 der beiden Transformatordifferentialschutzeinrichtungen 60 und 60A jeweils die Strommesswerte Mi21 bzw. Mi22 und erzeugt einen Ausschaltbefehl A, wenn die Strommesswerte Mi21 bzw. Mi22 eine vorgegebene Hilfsbedingung erfüllen. Die vorgegebene Hilfsbedingung besteht bei dem Ausführungsbeispiel gemäß Figur 3 darin, zu prüfen, ob die mit den Strommesswerten Mi21 und Mi22 gebildete Stromsumme bei Fahrzeugstillstand den Stromabnehmermaximalstromwert Ismax erreicht oder überschreitet. Die zweite Teileinrichtung E2 wird konkret den Ausschaltbefehl A erzeugen, wenn bei Fahrzeugstillstand gilt:

$$Mi21 + Mi22 = Ismax$$

Zusammengefasst wird bei dem Ausführungsbeispiel gemäß Figur 3 also jeder einzelne Pfad der Parallelschaltung 200 bzw. jeder der beiden Transformatoren 40 und 40A hinsichtlich des durch den jeweiligen Primärstrompfad P fließenden Stromes It1 bzw. It2 hin überwacht und es wird der Ausschaltbefehl A erzeugt, wenn die Ströme It1 und It2 ihren jeweiligen Maximalwert MW1 bzw. MW2 überschreiten oder gemeinsam bzw. in Summe bei Fahrzeugstillstand den Stromabnehmermaximalstromwert Ismax überschreiten.

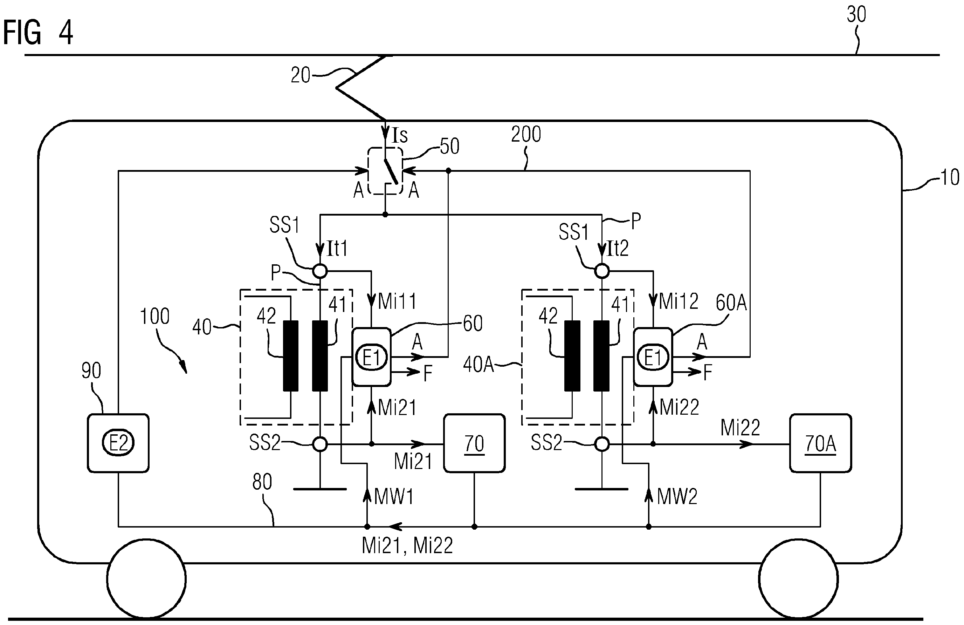

Die Figur 4 zeigt eine Ausführungsvariante des Ausführungsbeispiels gemäß Figur 3. Bei dem Ausführungsbeispiel gemäß Figur 4 werden die Strommesswerte Mi21 und Mi22 der zweiten Stromsensoren SS2 der beiden Transformatordifferentialschutzeinrichtungen 60 und 60A jeweils nicht direkt über die Datenverbindung 80 zur Fahrzeugsteuereinrichtung 90 übermittelt, sondern unter Mitwirkung bzw. über die jeweilige Antriebsteuereinrichtung 70 bzw. 70A, die dem jeweiligen Transformator 40 und 40A zugeordnet ist. Bezüglich der Übertragung der Strommesswerte Mi21 und Mi22 gelten somit die obigen Erläuterungen im Zusammenhang mit der Figur 2 entsprechend.

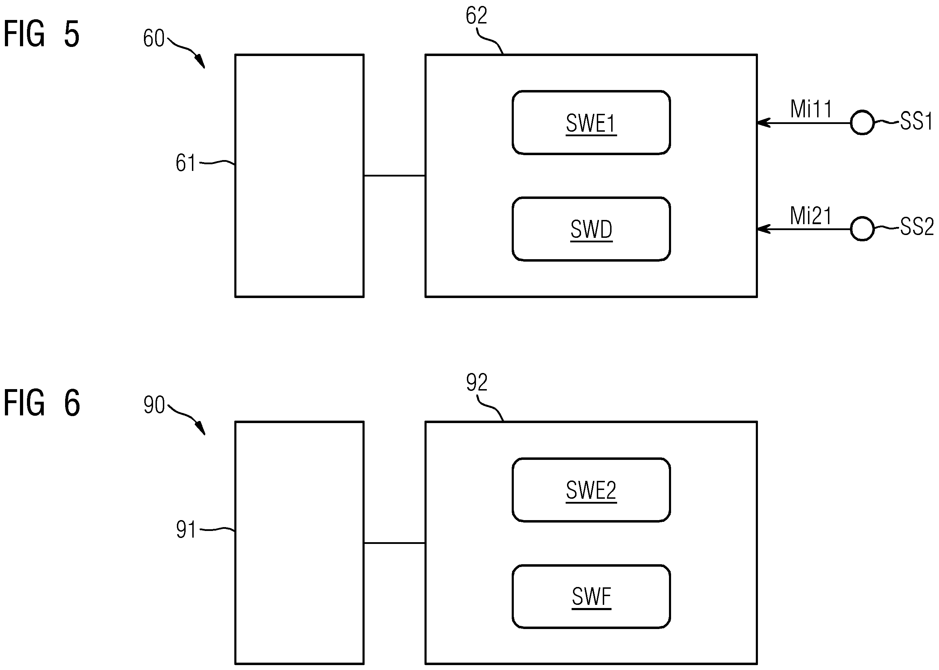

Die Figur 5 zeigt ein Ausführungsbeispiel für eine Transformatordifferentialschutzeinrichtung 60 bzw. 60A, die bei dem Fahrzeug 10 gemäß den Figuren 1 bis 4 eingesetzt werden kann. Die Transformatordifferentialschutzeinrichtung weist neben den Stromsensoren SS1 und SS2 eine Recheneinrichtung 61 und einen Speicher 62 auf.

Im Speicher 62 ist ein Softwaremodul SWE1 abgespeichert, das bei Ausführung durch die Recheneinrichtung 61 die erste Teileinrichtung E1 der Stillstandsstromüberwachungseinrichtung 100 bildet, wie sie im Zusammenhang mit den Figuren 1 bis 4 erläutert worden ist. Ein anderes Softwaremodul SWD gewährleistet die Transformatordifferentialschutzfunktion der Transformatordifferentialschutzeinrichtung.

Die Figur 6 zeigt ein Ausführungsbeispiel für eine Fahrzeugsteuereinrichtung 90, die bei dem Fahrzeug 10 gemäß den Figuren 1 bis 4 eingesetzt werden kann. Die Fahrzeugsteuereinrichtung 90 weist eine Recheneinrichtung 91 und einen Speicher 92 auf.

Im Speicher 92 ist ein Softwaremodul SWE2 abgespeichert, das bei Ausführung durch die Recheneinrichtung 91 die zweite Teileinrichtung E2 der Stillsstandstromüberwachungseinrichtung 100 einschließlich der Maximalwertbestimmungseinrichtung bildet, wie sie im Zusammenhang mit den Figuren 1 bis 4 erläutert worden sind. Ein anderes Softwaremodul SWF gewährleistet die Fahrzeugsteuerfunktion der Fahrzeugsteuereinrichtung 90.

Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

Bezugszeichen

| | |
|---|---|
| 10 | Fahrzeug |
| 20 | Stromabnehmer |
| 30 | Fahrdraht |
| 40 | Transformator |
| 40A | Transformator |
| 41 | Primärseite |
| 42 | Sekundärseite |
| 50 | Schalter |
| 60 | Transformatordifferentialschutzeinrichtung |
| 60A | Transformatordifferentialschutzeinrichtung |
| 61 | Recheneinrichtung |
| 62 | Speicher |
| 70 | Antriebsteuereinrichtung |
| 70A | Antriebsteuereinrichtung |
| 80 | Datenverbindung |
| 90 | zentrale Fahrzeugsteuereinrichtung |
| 91 | Recheneinrichtung |
| 92 | Speicher |
| 100 | Stillstandsstromüberwachungseinrichtung |
| 200 | Parallelschaltung |
| | |
| A | Ausschaltbefehl |
| E1 | erste Teileinrichtung |
| E2 | zweite Teileinrichtung |
| F | Transformatorfehlersignal |
| Is | Strom |
| Ismax | Stromabnehmermaximalstromwert |
| It1 | Strom |
| It2 | Strom |

| | |
|---|---|
| Mi11 | Strommesswert |
| Mi12 | Strommesswert |
| Mi21 | Strommesswert |
| Mi22 | Strommesswert |
| MW | Maximalwert |
| MW1 | Maximalwert |
| MW2 | Maximalwert |
| P | Primärstrompfad |
| SS1 | Stromsensor |
| SS2 | Stromsensor |
| SW1 | Softwaremodul |
| SW2 | Softwaremodul |
| SWD | Softwaremodul |
| SWF | Softwaremodul |

**Patentansprüche**

1. Fahrzeug (10) mit

   - zumindest einem Stromabnehmer (20) zum Anschluss an eine streckenseitige elektrische Energieversorgung und
   - mindestens einem eine Primärseite (41) aufweisenden Transformator (40), dessen Primärseite (41) mit dem Stromabnehmer (20) über einen Schalter (50) in Verbindung steht,

   **dadurch gekennzeichnet, dass**
   eine Stillstandsstromüberwachungseinrichtung (100) vorhanden ist, die den Schalter (50) öffnet und den Transformator (40) von dem Stromabnehmer (20) trennt, wenn bei Fahrzeugstillstand der Strom (It1) durch die Primärseite (41) des Transformators (40) einen vorgegebenen oder von der Stillstandsstromüberwachungseinrichtung (100) ermittelten Maximalwert (MW, MW1) überschreitet.

2. Fahrzeug (10) nach Anspruch 1,
   **dadurch gekennzeichnet, dass**

   - das Fahrzeug (10) in einem sich durch die Primärseite (41) des Transformators (40) erstreckenden Primärstrompfad (P) einen ersten und einen zweiten Stromsensor (SS1, SS2) umfasst, wobei einer der zwei Stromsensoren - in Stromflussrichtung vom Stromabnehmer (20) in Richtung Transformator (40) gesehen - vor dem Transformator (40) und der andere hinter dem Transformator (40) angeordnet ist,
   - die Stillstandsstromüberwachungseinrichtung (100) eine erste Teileinrichtung (E1) aufweist, die den Strom (It1) durch den ersten Stromsensor (SS1) überwacht und einen Ausschaltbefehl (A) für den Schalter (50) erzeugt, wenn der Strom (It1) durch den ersten Stromsensor (SS1) den Maximalwert (MW, MW1) erreicht oder überschreitet, und

   - die Stillstandsstromüberwachungseinrichtung (100) eine zweite Teileinrichtung (E2) aufweist, die den Strom (It1) durch den zweiten Stromsensor (SS2) überwacht und einen Ausschaltbefehl (A) für den Schalter (50) erzeugt, wenn der Strommesswert (Mi21) des zweiten Stromsensors (SS2) oder ein mit diesem gebildeter Hilfswert eine vorgegebene Hilfsbedingung erfüllt.

3. Fahrzeug (10) nach Anspruch 2,
   **dadurch gekennzeichnet, dass** der erste und zweite Stromsensor (SS1, SS2) Bestandteile einer Transformatordifferentialschutzeinrichtung (60) sind, die ein einen Fehler des Transformators (40) anzeigendes Transformatorfehlersignal (F) erzeugt, wenn die vom ersten und zweiten Stromsensor (SS1, SS2) gemessenen Ströme (It1) über ein vorgegebenes Maß hinaus voneinander abweichen.

4. Fahrzeug (10) nach Anspruch 3,
   **dadurch gekennzeichnet, dass** die Stillstandsstromüberwachungseinrichtung (100) eine Alarmeinrichtung aufweist, die ein einen Fehler der Stillstandsstromüberwachungseinrichtung (100) anzeigendes Fehlersignal erzeugt, wenn die vom ersten und zweiten Stromsensor (SS1, SS2) gemessenen Ströme (It1) über ein vorgegebenes Maß hinaus voneinander abweichen.

5. Fahrzeug (10) nach einem der voranstehenden Ansprüche,
   **dadurch gekennzeichnet, dass**

   - die Alarmeinrichtung in der Transformatordifferentialschutzeinrichtung (60) integriert ist oder durch die Transformatordifferentialschutzeinrichtung (60) selbst gebildet ist und
   - das Transformatorfehlersignal (F) in unverarbeiteter oder verarbeiteter Form als Fehlersignal der Stillstandsstromüberwachungseinrichtung (100) angesehen und/oder weitergeleitet wird, insbesondere an eine zentrale Fahrzeugsteuereinrichtung (90) des Fahrzeugs (10).

6. Fahrzeug (10) nach einem der voranstehenden Ansprüche,
   **dadurch gekennzeichnet, dass**

   - die erste oder zweite Teileinrichtung (E1, E2) durch ein Teilmodul, insbesondere ein Softwaremodul, der Transformatordifferentialschutzeinrichtung (60) gebildet ist und
   - die jeweils andere Teileinrichtung (E1) durch ein Teilmodul, insbesondere ein Softwaremodul, einer zentralen Fahrzeugsteuereinrichtung (90) gebildet ist.

**7.** Fahrzeug (10) nach einem der voranstehenden Ansprüche,
**dadurch gekennzeichnet, dass**

- eine Antriebsteuereinrichtung (70) des Fahrzeugs (10) die Strommesswerte (Mi21) des zweiten Stromsensors (SS2) empfängt und diese zu der zentralen Fahrzeugsteuereinrichtung (90), vorzugsweise über eine Fahrzeugdatenleitung oder einen Fahrzeugdatenbus, weiterleitet und/oder
- die Antriebssteuereinrichtung (70) als zweite Teileinrichtung (E2) arbeitet und die Strommesswerte (Mi21) des zweiten Stromsensors (SS2) überwacht und den Ausschaltbefehl (A) für den Schalter (50) erzeugt, wenn der Strommesswert (Mi21) des zweiten Stromsensors (SS2) oder ein mit diesem gebildeter Hilfswert eine vorgegebene Hilfsbedingung erfüllt.

**8.** Fahrzeug (10) nach einem der voranstehenden Ansprüche,
**dadurch gekennzeichnet, dass**

- dem Fahrzeug (10) ein Stromabnehmermaximalstromwert zugeordnet ist, der den maximalen Strom durch den Stromabnehmer (20) angibt,
- zu dem Transformator (40) ein oder mehr weitere Transformatoren (40A) oder ein oder mehr andere Lasten unter Bildung einer Parallelschaltung (200) parallel geschaltet sind und in jedem Zweig der Parallelschaltung (200) der Strom (It1, It2) unter Bildung von zweigbezogenen Strommesswerten (Mi21, Mi22) gemessen wird, und
- die zweite Teileinrichtung (E2) die zweigbezogenen Strommesswerte (Mi21, Mi22) unter Bildung des Hilfswertes summiert und die vorgegebene Hilfsbedingung als erfüllt ansieht und den Ausschaltbefehl (A) für den Schalter (50) erzeugt, wenn der Hilfswert den Stromabnehmermaximalstromwert erreicht oder überschreitet.

**9.** Fahrzeug (10) nach einem der voranstehenden Ansprüche,
**dadurch gekennzeichnet, dass**

- dem Fahrzeug (10) ein Stromabnehmermaximalstromwert zugeordnet ist, der den maximalen Strom durch den Stromabnehmer (20) angibt,
- zu dem Transformator (40) ein oder mehr weitere Transformatoren oder ein oder mehr andere Lasten unter Bildung einer Parallelschaltung (200) parallel geschaltet sind und
- eine Maximalwertbestimmungseinrichtung der Stillstandsstromüberwachungseinrichtung (100) den Maximalwert (MW, MW1) in Abhängigkeit von dem Stromabnehmermaximalstromwert und der Anzahl der Zweige gemäß einer vorgegebenen Verteilfunktion, insbesondere durch Division des Stromabnehmermaximalstromwerts durch die Anzahl der parallelen Zweige der Parallelschaltung (200), ermittelt.

**10.** Fahrzeug (10) nach einem der voranstehenden Ansprüche 1 bis 7,
**dadurch gekennzeichnet, dass**

- dem Fahrzeug (10) ein Stromabnehmermaximalstromwert zugeordnet ist, der einen maximal erlaubten Strom durch den Stromabnehmer (20) angibt,
- der gesamte durch den Stromabnehmer (20) fließende Strom (Is) durch den Transformator (40) fließt und der Stromabnehmermaximalstromwert den Maximalwert (MW) bildet und
- die zweite Teileinrichtung (E2) die vorgegebene Hilfsbedingung als erfüllt ansieht und den Ausschaltbefehl (A) für den Schalter (50) erzeugt, wenn der Strommesswert (Mi21) des zweiten Stromsensors (SS2) den Maximalwert (MW) erreicht oder überschreitet.

**11.** Verfahren zum Betreiben eines Fahrzeugs (10), das zumindest einen Stromabnehmer (20) zum Anschluss an eine streckenseitige elektrische Energieversorgung und mindestens einen eine Primärseite (41) aufweisenden Transformator (40), dessen Primärseite (41) mit dem zumindest einen Stromabnehmer (20) über einen Schalter (50) in Verbindung steht, umfasst,
**dadurch gekennzeichnet, dass** der Schalter (50) geöffnet und der Transformator (40) von dem Stromabnehmer (20) getrennt wird, wenn bei Fahrzeugstillstand der Strom (It1) durch die Primärseite (41) des Transformators (40) einen vorgegebenen oder ermittelten Maximalwert (MW, MW1) überschreitet.

**12.** Verfahren nach Anspruch 11,
**dadurch gekennzeichnet, dass**

- das Fahrzeug (10) in einem sich durch die Primärseite (41) des Transformators (40) erstreckenden Primärstrompfad (P) einen ersten und einen zweiten Stromsensor (SS1, SS2) umfasst, wobei einer der zwei Stromsensoren - in Stromflussrichtung vom Stromabnehmer (20) in Richtung Transformator (40) gesehen - vor dem Transformator (40) und der andere hinter dem Transformator (40) angeordnet ist,
- der Strom (It1) durch den ersten Stromsensor (SS1) überwacht und ein Ausschaltbefehl (A) für den Schalter (50) erzeugt wird, wenn der Strom (It1) durch den ersten Stromsensor (SS1) den Maximalwert (MW, MW1) erreicht oder überschreitet, und
- der Strom (It1) durch den zweiten Stromsensor (SS2) überwacht wird und ein Ausschaltbefehl (A) für den Schalter (50) erzeugt wird, wenn der Strommesswert (Mi21) des zweiten Stromsensors (SS2) oder ein mit diesem gebildeter Hilfswert eine vorgegebene Hilfsbedingung erfüllt.

**13.** Verfahren nach einem der voranstehenden Ansprüche 11 bis 12,
**dadurch gekennzeichnet, dass**

- der erste und zweite Stromsensor (SS1, SS2) Bestandteile einer Transformatordifferentialschutzeinrichtung (60) sind und ein einen Transformatorfehler anzeigendes Transformatorfehlersignal (F) erzeugt wird, wenn die vom ersten und zweiten Stromsensor (SS1, SS2) gemessenen Ströme (It1) über ein vorgegebenes Maß hinaus voneinander abweichen, und
- bei Vorliegen des Transformatorfehlersignals (F) auf einen Fehler der Stillstandsstromüberwachung (100) geschlossen wird.

**14.** Verfahren nach einem der voranstehenden Ansprüche 11 bis 13,
**dadurch gekennzeichnet, dass**

- der Strom (It1) durch den ersten Stromsensor (SS1) von der Transformatordifferentialschutzeinrichtung (60) überwacht wird und diese den Ausschaltbefehl (A) für den Schalter (50) erzeugt, wenn der Strom (It1) durch den ersten Stromsensor (SS1) den Maximalwert (MW, MW1) erreicht oder überschreitet, und
- der Strom (It1) durch den zweiten Stromsensor (SS2) von der zentralen Fahrzeugsteuereinrichtung (90) überwacht wird und diese den Ausschaltbefehl (A) für den Schalter (50) erzeugt, wenn der Strommesswert (ME21) des zweiten Stromsensors (SS2) oder ein mit diesem gebildeter Hilfswert eine vorgegebene Hilfsbedingung erfüllt.

**15.** Verfahren nach einem der voranstehenden Ansprüche 11 bis 14,
**dadurch gekennzeichnet, dass**

- eine Antriebssteuereinrichtung (70) des Fahrzeugs (10) die Strommesswerte (Mi21) des zweiten Stromsensors (SS2) empfängt und diese zu der zentralen Fahrzeugsteuereinrichtung (90), vorzugsweise über eine Fahrzeugdatenleitung oder einen Fahrzeugdatenbus, weiterleitet und/oder

- die Antriebssteuereinrichtung (70) die empfangenen Strommesswerte (Mi21) des zweiten Stromsensors (SS2) überwacht und den Ausschaltbefehl (A) für den Schalter (50) erzeugt, wenn der Strommesswert (Mi21) des zweiten Stromsensors (SS2) oder ein mit diesem gebildeter Hilfswert eine vorgegebene Hilfsbedingung erfüllt.

FIG 1

FIG 2

EP 3 770 000 A1

FIG 3

EP 3 770 000 A1

FIG 4

EP 3 770 000 A1

EP 3 770 000 A1

**FIG 5**

**FIG 6**

**Europäisches Patentamt**
**European Patent Office**
**Office européen des brevets**

# EUROPÄISCHER RECHERCHENBERICHT

Nummer der Anmeldung

EP 20 18 5258

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y | DE 10 2006 015085 A1 (KNORR BREMSE SYSTEME [DE]) 27. September 2007 (2007-09-27) * Absätze [0001], [0021] * * Abbildung 1 * ----- | 1,11 | INV. B60L3/12 B60L5/38 B60L5/39 B60L5/40 |
| Y | US 2016/236590 A1 (BUEHS FLORIAN [DE] ET AL) 18. August 2016 (2016-08-18) * Absätze [0015], [0016], [0017], [0018]; Abbildung 1 * ----- | 1,11 | B60L5/42 B60L9/00 |
| A | US 2019/092172 A1 (AHIKO YUICHI [JP] ET AL) 28. März 2019 (2019-03-28) * Abbildung 3 * * Absätze [0063], [0069], [0076] * ----- | 1-15 | |

RECHERCHIERTE SACHGEBIETE (IPC)

B60L

Der vorliegende Recherchenbericht wurde für alle Patentansprüche erstellt

| Recherchenort | Abschlußdatum der Recherche | Prüfer |
|---|---|---|
| Den Haag | 4. Dezember 2020 | Wirth, Sebastian |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

&: Mitglied der gleichen Patentfamilie, übereinstimmendes Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 20 18 5258

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

04-12-2020

| Im Recherchenbericht angeführtes Patentdokument | Datum der Veröffentlichung | Mitglied(er) der Patentfamilie | Datum der Veröffentlichung |
|---|---|---|---|
| DE 102006015085 A1 | 27-09-2007 | AT 512022 T<br>CN 101432162 A<br>DE 102006015085 A1<br>DK 1996427 T3<br>EP 1996427 A2<br>RU 2008140302 A<br>WO 2007104464 A2 | 15-06-2011<br>13-05-2009<br>27-09-2007<br>05-09-2011<br>03-12-2008<br>20-04-2010<br>20-09-2007 |
| US 2016236590 A1 | 18-08-2016 | DE 102013226356 A1<br>EP 3036127 A1<br>US 2016236590 A1<br>WO 2015049161 A1 | 02-04-2015<br>29-06-2016<br>18-08-2016<br>09-04-2015 |
| US 2019092172 A1 | 28-03-2019 | JP 6687423 B2<br>JP 2017158287 A<br>TW 201805188 A<br>US 2019092172 A1<br>WO 2017150618 A1 | 22-04-2020<br>07-09-2017<br>16-02-2018<br>28-03-2019<br>08-09-2017 |

EPO FORM P0461

Für nähere Einzelheiten zu diesem Anhang : siehe Amtsblatt des Europäischen Patentamts, Nr.12/82